# EUROPEAN PATENT APPLICATION

(11) **EP 4 692 167 A1**
(43) Date of publication of application: **11.02.2026**
(21) Application number: 25190659.0
(22) Date of filing: 21.07.2025
(51) Int. Cl.: C08G 65/333, C08G 63/91, C08G 65/336, C08L 71/02

(54) **CONTROLLABLE EXTENSION OF FLEXIBLE OLIGOMERIC DIOLS AND METHODS THEREOF**

(30) Priority: 09.08.2024 US 202463681628 P; 05.03.2025 US 202519071541
(71) Applicant: The Boeing Company, Arlington, VA 22202 (US)
(72) Inventor: NOWAK, Andrew Paul, Arlington, 22202 (US); VENTULETH, Michael Jared, Arlington, 22202 (US)
(74) Representative: Sandri, Sandro

(57) **Abstract**

An extended diol composition is disclosed, including a first component including a diol oligomer and a second component including a bisdimethylamino silane species, where the first component is in molar excess to the second component, and where the diol oligomer has a number average molecular weight Mn of from about 500 g/mol to about 5,000 g/mol. The diol oligomer can be α,ω hydroxyl terminated, or further include an R group that is a polyether, such as a perfluoropolyether, polyoxymethylene, polyethylene glycol, polytetramethylene glycol, or poly(propane diol), or a polyester, such as poly(caprolactone), poly(lactic acid), or poly(glycolic acid). The bisdimethylamino silane species may include an R¹ and R² that can include CH₃, vinyl, and phenyl. A method for making an extended diol composition is also disclosed.

## Description

### CROSS-REFERENCE TO RELATED APPLICATIONS

This application claims the benefit of U.S. Provisional Patent Application No. 63/681,628, filed on August 9, 2024.

### TECHNICAL FIELD

The present teachings relate generally to fabrication of flexible oligomeric diol compositions and, more particularly, to controlling and extending such compositions.

### BACKGROUND

Many commercial oligomeric diols are produced in the range of 500 - 5,000 Daltons. Extension of these oligomeric diols to higher molecular weight diols is desirable in order to create more flexible materials through lowered crosslink density. Flexible oligomeric diol compositions can be used in a variety of materials or material compositions within the aerospace industry such as for coatings, adhesives, sealants, elastomers and the like. However, existing materials can be expensive. While precursors are available, and are more reasonably priced, some precursors can be limited by the maximum molecular weight offered.

Due to limitations in available molecular weights of many commercial oligomeric diols, such materials can be prohibitively expensive and difficult to directly synthesize. The higher molecular weight species of these materials allows formulators greater range in production of coatings, adhesives, elastomers and sealants through the lower modulus materials able to be achieved by the reduced crosslink density produced by longer diol precursors.

Therefore, there is a need for methods to achieve higher molecular weight ranges in these precursors while maintaining diol end group functionality and limiting modifications to backbone character, thus providing extended materials while maintaining flexibility and reduced cost.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

An extended diol composition is disclosed. The extended diol composition includes a first component which can include a diol oligomer. The extended diol composition also includes a second component which may include a bisdimethylamino silane species, where the first component is in molar excess to the second component, and where the diol oligomer has a number average molecular weight Mn of from about 500 g/mol to about 5,000 g/mol. Implementations may include where the diol oligomer is α,ω hydroxyl terminated. The diol oligomer further may include an R group that is a polyether or a polyester. The polyether may include a perfluoropolyether, where the polyether is selected from a group which may include of polyoxymethylene, polyethylene glycol, polytetramethylene glycol, poly(propane diol), and perfluoropolyether, and the polyester is selected from a group which may include poly(caprolactone), poly(lactic acid), and poly(glycolic acid). The bisdimethylamino silane species may include an R¹ and R² that are the same and are selected from a group that may include CH₃, vinyl, and phenyl. The bisdimethylamino silane species may include an R¹ and R² that are not the same and are selected from a group may include CH₃, vinyl, and phenyl. The extended diol composition may include a telechelic HO-PEG-PFPE-PEG-OH structure where PEG is defined as poly(ethylene glycol) and PFPE is a perfluoropolyether. The bisdimethylamino silane species may include a disilane compound. The bisdimethylamino silane species may include 1,2-bis(dimethylamine) tetramethyldisilane). A molar ratio of the second component to the first component is from about 0.01:1 to about 0.99:1. The extended diol composition may include a molecular weight distribution having a number average molecular weight Mn from about 5,000 to about 50,000 g/mol.

Another extended diol composition is disclosed. The extended diol composition also includes a first component which may include a diol oligomer. The extended diol composition also includes a second component which may include a bisdimethylamino silane species, and where the first component is in molar excess to the second component, the diol oligomer has a number average molecular weight Mn of from about 500 g/mol to about 5,000 g/mol, and the bisdimethylamino silane species may include an R¹ and R² are selected from CH₃, vinyl, phenyl. Implementations of the extended diol composition can include where the diol oligomer further may include an R group that is a polyether or a polyester. The bisdimethylamino silane species may include 1,2-bis(dimethylamine) tetramethyldisilane). A molar ratio of the second component to the first component is from about 0.01:1 to about 0.99:1. The extended diol composition may include a molecular weight distribution having a number average molecular weight Mn from about 5,000 to about 50,000 g/mol.

A method for making an extended diol composition is disclosed. The method includes providing a diol oligomer to a reaction vessel, where the diol oligomer includes an average molecular weight of from about 500 to about 5,000 g/mol. The method also includes heating the diol oligomer in an inert atmosphere at a temperature of from about 50°C to about 110°C. The method also includes adding a bisdimethylamino silane compound while stirring. Implementations of the method for making an extended diol composition may include maintaining a molar excess of the diol oligomer over the bisdimethylamino silane compound, heating the diol oligomer at a temperature between 90°C and 100°C for a duration of about 1 hour to about 4 hours, and sparging the reaction vessel with nitrogen gas while adding the bisdimethylamino silane to remove residual dimethylamine byproduct. The diol oligomer is selected from polyoxymethylene, polyethylene glycol, polytetramethylene glycol, and perfluoropolyethers, and the bisdimethylamino silane compound may include 1,2-bis(dimethylamine) tetramethyldisilane.

The features, functions, and advantages that have been discussed can be achieved independently in various implementations or can be combined in yet other implementations further details of which can be seen with reference to the following description.

### DETAILED DESCRIPTION

Many commercial oligomeric diols are produced in the range of 500 - 5,000 Daltons and can be used in coatings, adhesives, sealants,elastomers and the like. Extension to longer molecular weight diols is desirable in order to create more flexible materials through lowered crosslink density. The present disclosure provides a process for extension of oligomeric diols with the use of a small, single O-Si-O bond created as a linkage, which preserves flexibility and character of the main precursor backbone as opposed to bulkier extension strategies such as urethane coupling with diisocyanates with potential to modify backbone properties. This reaction creates a relatively clean reaction product in a one-step reaction that can tune target molecular weight based on relative ratios of diol and bisdimethylamino silane compounds. Current oligomeric diols in desirable ranges for use in coatings, adhesives, sealants and elastomers are not commercially available or only offered at high cost. The present disclosure provides an alternate composition that can be extended at lower costs while maintaining flexibility of the composition as well as versatility and control of molecular weight and structures of oligomeric diols.

In known examples, bisdimethylamino silane coupling strategy can be employed with small molecules, such as 1,4 bis-(hydroxydimethylsilyl) benzene, to produce poly(silphenylene), a high temperature stable polysiloxane. These compositions, however, do not include the use or reaction with oligomeric diols (Mw>500) or non-Si based compounds.

In the present disclosure, the siloxane bond created during practicing the method herein, as a linkage preserves flexibility in the resulting chain backbone. The present method includes the fabrication of an extended diol oligomer comprised of one or more first components selected from diol oligomers having an average Mn 500 to 5,000 g/mol, where the polyoligomers are α, ω hydroxyl terminated. A second component, selected from the bisdimethylamino silane species is also included, where the first component is in molar excess to the second (molar ratio of second component to first component is <1).

The present disclosure provides a synthetic strategy to controllably increase the molecular weight of oligomeric diols. As described herein, the molecular weight will be referred to as the number average molecular weight, Mn, which can be defined as the ordinary arithmetic mean or average of the molecular weights of the individual constituents. The Mn can be determined by measuring the molecular weight of *n molecules,* summing the weights, and dividing by n. The method provides a means to controllably increase the molecular weight (Mn) of oligomeric diols. Using a generic diol oligomer as a precursor, a bisdimethylamino silane compound can be used as a chain extender in a step-growth reaction scheme. In a preferred example, the reaction can be run without need for solvent at elevated temperature (~100°C) evolving only dimethylamine gas as a byproduct.

The O-Si-O bond created as a linkage in the synthetic method preserves flexibility in the chain backbone as compared to alternative extension strategies such as urethane coupling with diisocyanates. The method for increasing the molecular weight of an oligomeric diol, includes providing a first polymer precursor to form a polymer chain, extending a length of the polymer chain by reacting a second polymer precursor (bisdimethylamino silane) with the polymer chain, and wherein the first polymer precursor is a diol oligomer. This method can extend oligomeric diols with a short spacer in a simple reaction that does not significantly modify the properties of the oligomeric diols. The present method further provides enhanced chemical stability as well. In examples, if the required molecular weight is in a shorter Mn range, the diol can be provided in the reaction in excess.

The present synthetic strategy calls for initially obtaining an oligomeric diol. The reaction can be conducted with or without solvent, however if the viscosity of the neat resin is sufficiently low for stirring and homogenization then a solvent free process is preferred. Elevated temperature is also desirable with an example range of about 50°C to about 110°C and an alternate range of from 90°C to about 110°C. A bisdimethyl amino compound can be introduced slowly over time in an inert atmosphere to avoid excessive evolution of dimethyl amine gas and temperature rise associated with the heat of reaction.

A general representation of the bisdimethylamino silane species is shown in Formula (I): 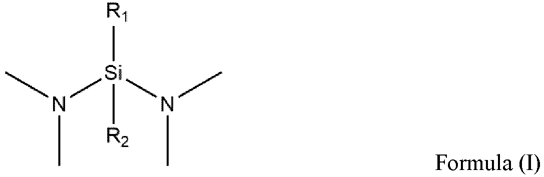 where, in examples, R₁ and R₂ can be CH₃, vinyl or phenyl, and be the same or different.

Alternatively the following compound, shown in Formula (II), 1,2-bis(dimethylamino)tetramethyldisilane can also be used.

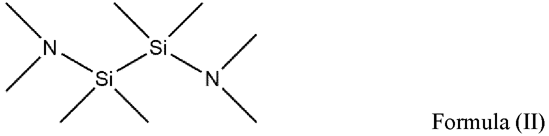

In examples, the oligomeric diol in the reaction has the following generic structure, shown in (III):

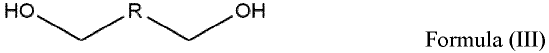

In the above oligomeric diol of Formula III, R can be an oligomer having an Mn from about 500 to about 5,000 Dalton. The R chemical species can be a polyether, polyester, or a polysiloxane. Specific examples of polyethers can include but are not limited to polyoxymethylene, polyethylene glycol, polytetramethylene glycol, and perfluoropolyethers. Specific examples of polyesters can include but are not limited to polycaprolactone, polylactic acid, polyglycolic acid. R can also contain combinations of the previous elements in a random or block copolymer configuration. A general reaction, as shown below in Scheme 1, is representative of the presently disclosed reaction, R₁ can be polyether, polyester, polysiloxane or perfluoropolyether, R₂ and R₃ can be methyl, vinyl or phenyl, and R₂ and R₃ can be either the same or different, as shown in Scheme 1:

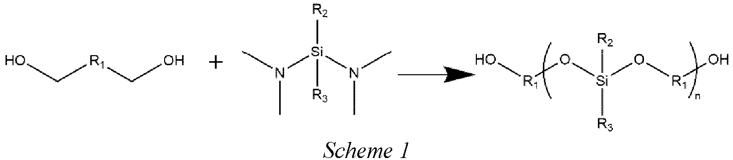

A specific form of the oligomeric diol precursor has CF₂ groups in the β position with respect to the hydroxyls, as shown in Formula (IV).

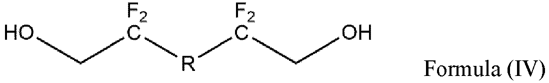

In the Formula (IV) example, the structure is specific to R being a perfluoropolyether, with the presence of the CF₂ groups next to the terminal OH groups. The broadest scope of the present teachings is use of the extended oligomer diol product in Scheme 1. A more specific example of interest can include the use of commercial telechelic precursors based on a HO-PEG-PFPE-PEG-OH structure, where PEG is defined as poly(ethylene glycol) and PFPE is a perfluoropolyether.

In exemplary examples, the extended diol composition can include a first component comprising a diol oligomer from Formulas I to IV and a second component comprising a bisdimethylamino silane species, where the first component is in molar excess to the second component in the extended diol composition. The diol oligomer has a number average molecular weight Mn of from about 500 g/mol to about 5,000 g/mol. Furthermore, the diol oligomer is α,ω hydroxyl terminated. The extended diol composition can include where the diol oligomer further comprises an R₁ group that can be a polyether or where the bisdimethylamino silane species comprises an R₂ and R₃ as shown in Scheme 1 above, that are not the same and are selected from a group consisting of CH₃, vinyl, phenyl. In other examples, the R₂ and R₃ can be different. The extended diol composition includes a telechelic HO-PEG-PFPE-PEG-OH structure or where the polyether comprises a perfluoropolyether. In examples, the diol oligomer of Formulas I to IV is selected from a group consisting of polyoxymethylene, polyethylene glycol, polytetramethylene glycol, and perfluoropolyether, or combinations thereof. Other examples include where the bisdimethylamino silane species comprises a disilane compound, such as 1,2-bis(dimethylamine) tetramethyldisilane). A molar ratio of the second component to the first component is from about 0.01:1 to about 0.99:1 in the final extended diol composition. In other examples, ratios of from about 0.7 to about 0.9 are applicable. Exemplary extended diol compositions having first and second components can have a molecular weight distribution having a number average molecular weight Mn from about 5,000 to about 50,000 g/mol, or from about 5,000 to about 25,000, or from about 10,000 to about 30,000.

A diol oligomer with a molecular weight ranging from approximately 500 to 5,000 grams per mole can be synthesized according to the present disclosure through the reaction of bisdimethylamino silane compounds and polyether or polyester-based precursors. The resulting extended diols exhibit improved thermal stability due to their O-Si-O bonds formed during polymerization. In one example, a telechelic HO-PEG-PFPE-PEG-OH structure is used as the precursor material, which may be prepared by reacting perfluoropolyethers with polyethylene glycol or polycaprolactone-based diols. In this example, polyethylene glycol (PEG), perfluoropolyether (PFPE) and hydroxide groups (OH) are present. The presence of hydroxide groups provides a structure and material that can be classified as a prepolymer capable of entering into further polymerization or other reactions via these reactive hydroxide end groups.

In another example, polyester precursors such as polycaprolactone, polylactic acid and polyglycolic acid can alternately be employed to create a more flexible backbone. The bisdimethylamino silane compound used in the reaction shown in Scheme 1 can also be substituted with various R₂ and R₃ groups including methyl (CH₃), vinyl (-C=CH) or phenyl (-PhIn one aspect, R₂ and R₃ may be the same or different alkyl groups such as ethyl (C₂H₅), propyl (-n-C₃H₇) or butyl (-n-C₄H₉), where the "n" designation is indicative of linear hydrocarbons. In another example, these substituents can comprise phenyl rings. The bisdimethylamino silane compound may also have a linear chain of repeating units between the dimethylamine groups. In another example, R₁ and R₂ can be methyl (CH₃) or vinyl (-C=CH). Another example includes bisdimethylamino silanes with phenyl rings on the silicon atoms. In another aspect, the disilane compound may be a tetramethyldisilane or other suitable derivatives of dimethylamine and dihydrogen silylene (SiH₂). The R₂ and R₃ substituents above may also include heteroatoms such as oxygen (-O-) or nitrogen (-NH-). The choice of R₂ and R₃ substituents affects reactivity, compatibility, and properties of the bisdimethylamino silanes used as chain extenders for diol oligomer extension reactions. By selecting suitable compounds from this class, one may achieve optimal results in terms of molecular weight control during polymerization while maintaining flexibility. In one example, the bisdimethylamino silanes may be prepared by reacting a dichlorosilane with dimethylamine in an inert solvent. The resulting product is then reacted with diol oligomers to form extended polymeric materials. In another example, a mixture of different R₁, R₂, or R₃ substituents is prepared and then reacted with the diol oligomers to form extended polymeric materials having varying properties such as thermal stability or chemical resistance.

The diol oligomer synthesis may be performed in the presence of a solvent such as tetrahydrofuran (THF), dichloromethane (DCM), xylenes, toluene, chloroform, or dimethylformamide (DMF). The choice of solvent depends on factors like reactivity, viscosity, and product solubility. In some cases, no solvent is used during processing due to the low viscosities of the starting materials.

The temperature range of the present reaction may be adjusted from about 50°C to about 110°C depending upon reactant properties and desired end-group functionality. For example, a higher temperature may facilitate faster condensation reactions while lower temperatures might reduce side-reactions or degradation products. Alternatively, temperatures from about 25°C to about 90°C would be applicable. The molar ratio of bisdimethylamino silane compound to diol oligomer is also useful for controlling molecular weight growth during extension.

In one example, the reaction mixture may be heated from about 90°C to about 100°C with slow addition (for example, over a period of approximately 30 minutes) of the bisdimethylamino silane compound over a period. This allows gradual consumption by the diol oligomer and maintains control over molecular weight distribution. The rate may vary based on reactant concentrations, temperature or desired product properties, such as from about 1 minute to about 120 minutes, or from about 30 minutes to about 60 minutes.

The resulting extended diols may be further functionalized with additives such as flame retardants to enhance their performance in various applications like coatings, adhesives, sealants, elastomers, and the like. These materials inherently exhibit improved thermal stability due to the presence of O-Si-O bonds formed during polymerization. In examples, additives can be blended or mixed with the extended diols after reaction or incorporated via additional reactions during the extension reaction. Additional additives can include pigments, anti-oxidants and UV stabilizers. Illustrative examples include carbon black. It should be noted that the incorporation of fillers may be most applicable to mixing along with compositions of the present disclosure into a final resin or sealant composition.

The solvent used in the present reaction can be optional and chosen from various solvents that facilitate efficient mixing of reactants without interfering with the condensation reactions between diol oligomers and bisdimethylamino silane compounds. Suitable examples can include but are not limited to tetrahydrofuran, dichloromethane, dimethylformamide, toluene, xylene, cyclohexanone, methyl isobutyl ketone (MIBK), and. In one example, the solvent can be a mixture of two or more solvents selected from this list to achieve optimal dissolution properties for specific reactants.

In another example, no solvent can be used at all if the diol oligomer is of a viscosity as to facilitate mixing with bisdimethylamino silane compound without any additional assistance or effort. This approach may simplify product purification and reduce waste generation during processing.

In certain examples of this disclosure, it may be desirable to dissolve the diol oligomer and bisdimethylamino silane compound mixture in a suitable solvent prior to heating or during extension. This may facilitate efficient mixing, heat transfer, and reaction kinetics while minimizing potential side reactions or impurities that might arise from undissolved reactants. Suitable solvents for this purpose include tetrahydrofuran (THF), dichloromethane (DCM) and dimethylformamide (DMF). For example, a 1:2 ratio of THF to diol oligomer may be used in combination with bisdimethylamino silane compound concentrations ranging from 0.5% to 10%. In another example, DCM may be employed at temperatures between -20°C and room temperature (RT) for the dissolution process. In a specific example, it is possible that THF may be added gradually over several hours while maintaining constant stirring conditions during extension reactions involving perfluoropolyethers as R groups. This may help to minimize potential degradation or side-reaction products associated with high-temperature processing of these sensitive materials. In certain cases where solvents are not useful or desired, it is possible that undissolved reactants may still achieve efficient mixing and heat transfer through mechanical agitation alone. This may be particularly useful when working with highly viscous diol oligomers or bisdimethylamino silane compounds requiring minimal solvent addition for optimal reaction conditions. In certain examples where specific functional groups are to be incorporated into diol oligomers, solvents like dimethoxybenzene (DMB) or 1-methyl-2-pyrrolidinone may be used as a medium for efficient dissolution. These solvents may help maintain reactant concentrations and facilitate the formation of desired chemical bonds.

The process of providing a diol oligomer involves several steps that may be tailored to specific examples and applications. In one example, the starting material may comprise polyethylene glycol (PEG) or other types of polyethers with molecular weights ranging from approximately 500 to about 5,000 g/mol. PEG can be used in a range of precursor molecular weight of from about 200 to about 2,000,000. An additional example can include poly(THF) or poly(tetramethylene glycol). These materials can be used in a range of from 500 to about 3,000 or from about 500 to about 10,000 or up to about 20,000 on the upper end. The PEG is then subjected to an esterification reaction using a suitable catalyst such as dibutyltin dilaurate and diisophthalic acid in the presence of tetrahydrofuran (THF) or other solvents at temperatures between 50°C to 100°C for several hours, resulting in the formation of poly(ethylene glycol-co-ester). In another example, a polyester-based diol oligomer may be obtained through an analogous process using polycaprolactone (PCL) or other types of polyesters with molecular weights ranging from about 500 to about 5,000 g/mol.

In yet another example, the starting material comprises one or more perfluoropolyethers such as HO-PEG-PFPE-PEG-OH structures. These diol oligomers may be synthesized through a ring opening reaction between PEG and PFPE diol at temperatures ranging from 50°C to 100°C for several hours, resulting in the formation of perfluoropolyether-based poly(ethylene glycol-block-perfluoropolyether). In still another example, a diol oligomer may comprise polysiloxanes with molecular weights ranging from approximately 500 to about 5,000 g/mol. The aforementioned reactions may be monitored by techniques like gel permeation chromatography and nuclear magnetic resonance spectroscopy.

In all examples, it is useful to maintain precise control over reactant concentrations, temperature, pressure, and other process parameters during synthesis. This ensures that diol oligomers with consistent molecular weights and properties are obtained for subsequent extension reactions or applications in various industries such as coatings, adhesives, sealants, elastomers, and more.

To heat the diol oligomer to an optimal temperature range of from about 90 to about 100°C under an inert atmosphere, various examples may be employed depending on specific reaction conditions and desired product properties. In one example, the heating step is performed in a three-necked flask fitted with a reflux condenser and two septa, allowing for efficient heat transfer while minimizing exposure to atmospheric oxygen or moisture. The diol oligomer may be dissolved in an optional solvent such as tetrahydrofuran (THF), dichloromethane (DCM) or dimethylformamide (DMF) prior to heating if desired. In another example, the reaction mixture is heated, where bisdimethylamino silane compound is introduced into the reactor containing diol oligomer in stages over 30 minutes to an hour. In yet another example, a microwave-assisted heating method is employed using a specialized reaction vessel designed specifically for this purpose. The diol oligomer and bisdimethylamino silane compound are mixed in the reactor under inert atmosphere before being subjected to controlled microwaves with specific frequency ranges (e.g., 2-5 GHz) at power levels between 100-500 W. In a further example, an ultrasonic-assisted heating method is used where high-frequency sound waves generated by transducers or piezoelectric devices are applied directly to the reaction mixture. This approach enables efficient heat transfer and mixing without introducing external mechanical stress that may compromise product quality. Regardless of the chosen heating protocol, it is useful to maintain a consistent temperature range between 90-100°C throughout the extension process while ensuring minimal exposure to atmospheric oxygen or moisture. By doing so, diol oligomers with precise molecular weight control may be achieved through controlled condensation reactions without compromising their chemical stability and reactivity.

The slow addition of the bisdimethylamino silane compound to the diol oligomer reaction mixture may be achieved through various examples that optimize molecular weight control and product properties. In one example, the bisdimethylaminosilane species is introduced into a 250-mL flask containing approximately 100 g of fluorochemical-based telechelic precursor (e.g., HO-PEG-PFPE-PEG-OH) at an elevated temperature range between 90°C to 110°C. The addition rate may be controlled by adjusting the flow rate or volume delivery system, allowing for a gradual consumption of bisdimethylamino silane compound over approximately thirty minutes to one hour while maintaining optimal reaction conditions.

In another example, the slow addition process is facilitated through use of an automated dispensing device that precisely controls the amount and timing of bisdimethylaminosilane species introduction. This may be achieved by programming a syringe pump or other precision dosing system to deliver small volumes (e.g., 0.1-10 mL) at regular intervals, ensuring consistent reaction conditions throughout the extension process.

In yet another example, manual addition is employed through use of a syringe, an eyedropper or pipette, allowing for precise control over bisdimethylamino silane compound delivery and minimizing potential contamination risks associated with automated systems. This approach may be particularly useful when working in small-scale reactions (e.g., 10-50 mL) where precision dosing becomes more challenging. In still another example, the slow addition process is optimized by incorporating a temperature-controlled reaction vessel or heat transfer system that maintains optimal conditions during bisdimethylamino silane compound introduction. This may be achieved through use of thermally controlled reactors with precise temperature control (±0.1°C) and/or external heating/cooling systems. In yet another example, the slow addition process is further optimized by incorporating a gas flow or sparging system that maintains an inert atmosphere during reaction conditions to minimize side reactions and degradation products associated with air exposure. Sparging refers to a process related to chemistry in which a gas is bubbled through a liquid to remove other gases or volatile compounds during a reaction process or step thereof. This may be achieved through use of nitrogen (N₂), argon (Ar) or other gases as reactants. In still another example, the slow addition process is further optimized by incorporating a mechanical stirring device such as magnetic stirrer bar, overhead mixer or impeller that ensures uniform mixing and reaction conditions throughout extension reactions. This may be particularly useful when working with viscous materials or large-scale reactors where flow patterns become more complex. These examples demonstrate various ways to achieve optimal slow addition of bisdimethylamino silane compound while stirring during the diol oligomer extension process, allowing for precise control over molecular weight growth and product properties in a wide range of reaction conditions.

The sparging step at the end of the extension reaction involves introducing nitrogen (N₂) into the reactor to remove residual dimethylamine byproduct and maintain an inert atmosphere during extension of the diol oligomer chain. This useful step ensures that any dissolved bisdimethylamino silane compound is eliminated, thereby preventing unwanted side reactions in the use of extended diol resin in later compositions. In one example, a nitrogen gas flow rate may be controlled between 0.1-10 standard liters per minute (SLPM) to achieve optimal sparging conditions for efficient removal of dimethylamine byproduct and maintenance of the inert atmosphere. In another example, the N₂ gas is introduced through an inlet located at least 5 cm above the reaction mixture surface to prevent entrainment or contamination. In a further example, multiple nitrogen inlets may be used simultaneously along with controlled flow rates between 0.1-10 SLPM for each inlet to bubble inert gas through the solution during the reaction to push out dissolved dimethylamine. In yet another example, an N₂ gas pressure regulator is employed to maintain a constant flow within the reaction vessel during sparging. In some examples, the nitrogen flow rate may be adjusted based on real-time monitoring of reactant concentrations or product properties using techniques such as infrared spectroscopy (IR), nuclear magnetic resonance (NMR) spectrometry, mass spectrometry (MS), and gas chromatography-mass spectrometry (GC-MS). In other examples, the sparging step may be performed at different temperatures between 20°C to 100°C or pressures up to 10 bar. In one example, a combination of nitrogen flow rate control with temperature regulation is employed during sparging. For example, increasing the N₂ gas flow rate from 0.1-5 SLPM while maintaining an ambient reaction temperature (25°C) may enhance dimethylamine removal efficiency and minimize product degradation. In another example, decreasing the N₂ gas flow rate to below 0.01 SLPM at a higher reaction temperature of around 80°C may be beneficial for reducing side reactions or byproduct formation. In some examples, sparging with nitrogen is performed in combination with other techniques such as vacuum distillation, centrifugal separation, and/or filtration steps following the extension process. In these cases, precise control over N₂ flow rates may help optimize product purity while minimizing waste generation.

An exemplary method for making an extended diol composition, can include providing a diol oligomer to a reaction vessel, the diol oligomer comprising an average molecular weight of from about 500 to about 5,000 g/mol, heating the diol oligomer in an inert atmosphere at a temperature of from about 50 to about 110°C, and adding a bisdimethylamino silane compound while stirring. The method for making an extended diol composition can further include maintaining a molar excess of the diol oligomer over the bisdimethylamino silane compound, heating the diol oligomer at a temperature between 90°C and 100°C while adding the bisdimethylamino silane compound over 30 to 60mins. Then continue heating for a duration of about 1 hour to about 4 hours. Finally, sparging the reaction solution with nitrogen gas following extension to remove residual dimethylamine byproduct. As noted previously, the method for making an extended diol composition can include where the diol oligomer is selected from polyoxymethylene, polyethylene glycol, polytetramethylene glycol, and perfluoropolyethers, and the bisdimethylamino silane compound comprises 1,2-bis(dimethylamine) tetramethyldisilane, as well as the aforementioned methyl, vinyl or phenyl-functional variations thereof.

Further, the present disclosure comprises aspects according to the following clauses.
Clause 1. An extended diol composition, comprising:
   a first component comprising a diol oligomer; and
   a second component comprising a bisdimethylamino silane species, wherein the first component is in molar excess to the second component, and where the diol oligomer has a number average molecular weight Mn of from about 500 g/mol to about 5,000 g/mol.
Clause 2. The extended diol composition of clause 1, wherein the diol oligomer is α,ω hydroxyl terminated.
Clause 3. The extended diol composition of clause 1, wherein the diol oligomer comprises: 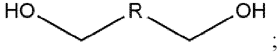 and
   an R group that comprises a polyether or a polyester.
Clause 4. The extended diol composition of clause 1, wherein the bisdimethylamino silane species comprises: 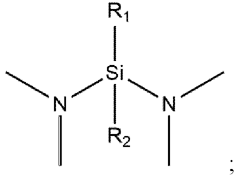 and
   an R₁ and R₂ that are the same and are selected from a group consisting of CH₃, vinyl, and phenyl.
Clause 5. The extended diol composition of clause 1, wherein the bisdimethylamino silane species comprises: 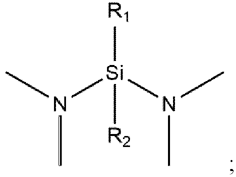 and
   an R₁ and R₂ that are not the same and are selected from a group consisting of CH₃, vinyl, and phenyl.
Clause 6. The extended diol composition of clause 1, further comprising a telechelic HO-PEG-PFPE-PEG -OH structure.
Clause 7. The extended diol composition of clause 3, wherein the polyether comprises a perfluoropolyether.
Clause 8. The extended diol composition of clause 3, wherein:
   the polyether is selected from a group consisting of polyoxymethylene, polyethylene glycol, polytetramethylene glycol, poly(propane diol), and perfluoropolyether; and
   the polyester is selected from a group consisting of poly(caprolactone), poly(lactic acid), and poly(glycolic acid).
Clause 9. The extended diol composition of clause 1, wherein the bisdimethylamino silane species comprises a disilane compound.
Clause 10. The extended diol composition of clause 1, wherein the bisdimethylamino silane species comprises 1,2-bis(dimethylamine) tetramethyldisilane).
Clause 11. The extended diol composition of clause 1, wherein a molar ratio of the second component to the first component is from about 0.01:1 to about 0.99:1.
Clause 12. The extended diol composition of clause 1, wherein the extended diol composition comprises a molecular weight distribution having a number average molecular weight Mn from about 5,000 to about 50,000 g/mol.
Clause 13. An extended diol composition, comprising:
   a first component comprising a diol oligomer;
   a second component comprising a bisdimethylamino silane species; and wherein:
      the first component is in molar excess to the second component;
      the diol oligomer has a number average molecular weight Mn of from about 500 g/mol to about 5,000 g/mol;
      the extended diol composition has a number average molecular weight Mn greater than 5,000 g/mol; and
      the bisdimethylamino silane species comprises: 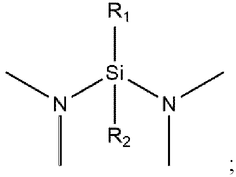 and
      an R¹ and R² are selected from CH₃, vinyl, phenyl.
Clause 14. The extended diol composition of clause 13, wherein the diol oligomer comprises: 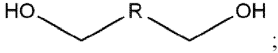 and
   an R group that comprises a polyether or a polyester.
Clause 15. The extended diol composition of clause 13, wherein the bisdimethylamino silane species comprises 1,2-bis(dimethylamine) tetramethyldisilane).
Clause 16. The extended diol composition of clause 13, wherein a molar ratio of the second component to the first component is from about 0.01:1 to about 0.99:1.
Clause 17. The extended diol composition of clause 13, wherein the extended diol composition comprises a molecular weight distribution having a number average molecular weight Mn from about 5,000 to about 50,000 g/mol.
Clause 18. A method for making an extended diol composition, comprising:
   providing a diol oligomer to a reaction vessel, the diol oligomer comprising an average molecular weight of from about 500 to about 5,000 g/mol;
   heating the diol oligomer in an inert atmosphere at a temperature of from about 50 to about 110°C; and
   adding a bisdimethylamino silane compound while stirring.
Clause 19. The method for making an extended diol composition of clause 18, further comprising:
   maintaining a molar excess of the diol oligomer over the bisdimethylamino silane compound;
   heating the diol oligomer at a temperature between 90°C and 100°C for a duration of about 1 hour to about 4 hours; and
   sparging the reaction vessel with nitrogen gas while adding the bisdimethylamino silane to remove residual dimethylamine byproduct.
Clause 20. The method for making an extended diol composition of clause 18, wherein:
   the diol oligomer is selected from polyoxymethylene, polyethylene glycol, polytetramethylene glycol, and perfluoropolyethers; and
   the bisdimethylamino silane compound comprises 1,2-bis(dimethylamine) tetramethyldisilane.

While the present teachings have been illustrated with respect to one or more implementations, alterations and/or modifications may be made to the illustrated examples without departing from the spirit and scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope and spirit of the present teachings being indicated by the following claims.

## Claims

1. An extended diol composition, comprising:
a first component comprising a diol oligomer; and
a second component comprising a bisdimethylamino silane species, wherein the first component is in molar excess to the second component, and where the diol oligomer has a number average molecular weight Mn of from about 500 g/mol to about 5,000 g/mol.

2. The extended diol composition of claim 1, wherein the diol oligomer is α,ω hydroxyl terminated.

3. The extended diol composition of claim 1, wherein the diol oligomer comprises: 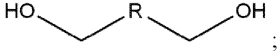 and
an R group that comprises a polyether or a polyester.

4. The extended diol composition of any one of the preceding claims, wherein the bisdimethylamino silane species comprises: 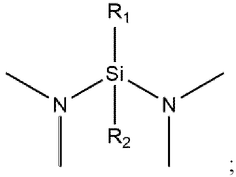 and
an R₁ and R₂ that are the same and are selected from a group consisting of CH₃, vinyl, and phenyl.

5. The extended diol composition of any one of claims 1-3, wherein the bisdimethylamino silane species comprises: 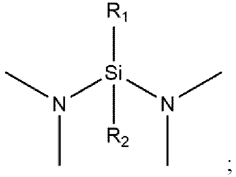 and
an R₁ and R₂ that are not the same and are selected from a group consisting of CH₃, vinyl, and phenyl.

6. The extended diol composition of any one of the preceding claims, further comprising a telechelic HO-PEG-PFPE-PEG -OH structure.

7. The extended diol composition of claim 3, wherein the polyether comprises a perfluoropolyether.

8. The extended diol composition of claim 3, wherein:
the polyether is selected from a group consisting of polyoxymethylene, polyethylene glycol, polytetramethylene glycol, poly(propane diol), and perfluoropolyether; and
the polyester is selected from a group consisting of poly(caprolactone), poly(lactic acid), and poly(glycolic acid).

9. The extended diol composition of claim 1, wherein the bisdimethylamino silane species comprises a disilane compound.

10. The extended diol composition of claim 1, wherein the bisdimethylamino silane species comprises 1,2-bis(dimethylamine) tetramethyldisilane.

11. The extended diol composition of any one of the preceding claims, wherein a molar ratio of the second component to the first component is from about 0.01:1 to about 0.99:1.

12. The extended diol composition of any one of the preceding claims, wherein the extended diol composition comprises a molecular weight distribution having a number average molecular weight Mn from about 5,000 to about 50,000 g/mol.

13. A method for making an extended diol composition, comprising:
providing a diol oligomer to a reaction vessel, the diol oligomer comprising an average molecular weight of from about 500 to about 5,000 g/mol;
heating the diol oligomer in an inert atmosphere at a temperature of from about 50 to about 110°C; and
adding a bisdimethylamino silane compound while stirring.

14. The method for making an extended diol composition of claim 13, further comprising:
maintaining a molar excess of the diol oligomer over the bisdimethylamino silane compound;
heating the diol oligomer at a temperature between 90°C and 100°C for a duration of about 1 hour to about 4 hours; and
sparging the reaction vessel with nitrogen gas while adding the bisdimethylamino silane to remove residual dimethylamine byproduct.

15. The method for making an extended diol composition of any one of claims 13-14, wherein:
the diol oligomer is selected from polyoxymethylene, polyethylene glycol, polytetramethylene glycol, and perfluoropolyethers; and
the bisdimethylamino silane compound comprises 1,2-bis(dimethylamine) tetramethyldisilane.
